# EUROPEAN PATENT SPECIFICATION

(11) **EP 1 965 336 B1**
(45) Date of publication and mention of the grant of the patent: **11.04.2012**
(21) Application number: 08001642.1
(22) Date of filing: 29.01.2008
(51) Int. Cl.: G06K 7/10

(54) **Optical scanning module**
Modul zur optischen Erfassung
Module de balayage optique

(30) Priority: 02.03.2007 CN 200720003083 U
(43) Date of publication of application: 03.09.2008
(73) Proprietor: Champtek Incorporated, Hsin-Tien City 231 Taipei (TW)
(72) Inventor: Schonenberg, Cornelis Reinier J., 3769 AN Soesterberg (NL); Hermen, Hendrik Nijzink, 3769 AN Soesterberg (NL)
(74) Representative: TER MEER - STEINMEISTER & PARTNER GbR

(56) References cited:
- US-A- 5 268 565
- US-A- 5 286 961
- US-A1- 2003 052 170
- US-B1- 6 390 369

## Description

### BACKGROUND OF THE INVENTION

### 1. Field of the Invention

The present invention generally relates to a barcode reader, and more particularly to a scanning module employing charge couple device (CCD) technology and principle of optics to sense a barcode.

### 2. Description of Prior Art

As optical encoding technology advances, optical encoding information becomes popular, and one of the common optical encoding information is barcode which is a measure taken to substitute an input of number(s) or alphabet(s) from keyboard to computer. Users simply scan the barcode to directly input the number(s) and alphabet(s) into a computer without requiring a single stroke of the keyboard. A secret code arrangement such as a combination of wide and narrow bars (binary level) and a combination of widths of black lines and white portions (or spacings) between the black lines is read by a barcode scanner for carrying out an encoding, and transmitted and inputted into a computer. Barcode has been used extensively in our life, not just being used as a goods management tool for supermarkets, warehouses, distribution companies or as a payment slips for parking fees, credit card payments and many other payment slips, but also being used as a necessary input tool. For example, a barcode system is applied in a supermarket or warehouse, the barcode inputs the product code of a product to display the selling price of a product and count the inventory, sales volume and future order of the product by a computer of the barcode system, so that we can know about the current inventory well.

However, the architecture of common barcode readers used in the past usually come with a design that the range of its light path is very broad, so that the positions and relative distance between modules or components are farther, and the space occupied by modules and components in such arrangement is relatively greater, and thus it is difficult to meet the miniaturization requirement.

In view of the shortcomings of the prior art, the inventor of the present invention based on years of experience in the related field to conduct extensive researches and experiments, and finally developed an optical module to provide a feasible design and overcome the foregoing shortcomings of the prior art.

US 2003/0052170 A1 discloses an optical scanning apparatus of a barcode scanner having an optical sensor, a polygon mirror, i.e. a reflecting drum having a plurality of light reflecting surfaces, a mirror disposed on a lateral side of the reflecting drum such that the reflecting surface of the mirror faces anyone of the light reflecting surfaces of the polygon mirror. At the center of the mirror, a hole is provided through which a laser beam of a light generator is input to the polygon mirror radially with regard to the rotary axis thereof.

US 5,286,961 A discloses another barcode reader having an optical scanning apparatus that comprises a laser beam source as light generator, a reflecting drum having a plurality of light reflecting surfaces, a mirror having a through hole and an optical sensor. The light beam generated by the laser beam source is passed through the hole of the mirror and input radially onto the reflecting drum that generates a scanning beam incident onto the barcode to be read. The scanning light beam returned to the reflecting drum is reflected to the mirror which directs the returned light beam onto the optical sensor.

US 5,268,565 A discloses another barcode reader having an optical scanning device that comprises a polygon mirror, an optical sensor, a reflection mirror having a through hole, and a laser source. The light beam emitted by the laser source is projected onto anyone of the light reflecting surfaces of the polygon mirror which reflects the incident light beam onto a barcode symbol via another reflection mirror. Light returning from the barcode symbol is reflected by the reflection mirror onto the polygon mirror and then projected onto the light reception sensor via a light collection lens and the reflection mirror.

US 6,390,369 B1 describes a streamlined scanner spinner. Herein, the barcode scanner comprises a laser, a photodetector, a spinner with a plurality of mirror facets arranged circumferentially in any suitable polygon about a rotary or centerline axis. A laser beam from the laser is guided through a first mirror having a center hole to one of the mirror facets, and is then reflected into the direction of a barcode. The reflected light from the barcode is guided back from a second mirror to the mirror facet and then over the first mirror to the photodetector. Since the spinner facets have to be sufficiently large for collecting sufficient inbound return light for decoding the barcode, a windage drag leads to aerodynamically generated noise from the rotating spinner during operation. Thus, fins being preferably arcuate with convex outer edges are spaced circumferentially apart from each other along straight edges of a hub disposed generally parallel to the mirror facets, to reduce the windage drag and therefore the noise generation.

### SUMMARY OF THE INVENTION

It is an object of the present invention to provide an optical scanning module of a barcode scanner, wherein the range of the overall light path as well as the relative distances and positions of the installed components of the optical scanning module can be reduced to decrease the space occupied by the installed scanning module, so as to meet the miniaturization requirement.

This object is achieved by the invention as defined in claim 1.

According to the present invention an optical scanning module comprises: an optical sensor; a reflecting drum, having an axle installed along the longitudinal direction and at the center of the reflecting drum and a plurality of light reflecting surfaces disposed continuously around external sides of the reflecting drum; a mirror, having a reflecting plane, disposed on a side of the reflecting drum, such that the reflecting plane faces one of the light reflecting surfaces, and the mirror has a penetrating hole for passing the reflecting plane; and a light generator situated at a lateral side of the reflecting drum proximate to the mirror, for reflecting a generated light beam by a reflecting plate through the penetrating hole of the mirror and projecting the light beam in a plane perpendicular to the axle of the reflecting drum in a non-radial manner onto one of the light reflecting surfaces of the reflecting drum, and then reflecting the light beam to the barcode. The scanned light beam is returned to any one of the light reflecting surface of the reflecting drum and reflected to the reflecting plane of the mirror, and the reflecting plane reflects the returned light beam to the optical sensor, and the optical sensor receives the light beam. The optical sensor, the reflecting drum, the mirror and the light generator are contained in a housing. The light generator and the optical sensor are situated on the same side of the reflecting drum. Since a portion of the back-and-forth light path for light beams to travel is overlapped, the range of the light path can be reduced to achieve the aforementioned objective.

### BRIEF DESCRIPTION OF DRAWINGS

Fig. 1 is a perspective view of an optical scanning module;
Fig. 2 is a schematic view of the operation of an optical scanning module;
Fig. 3 is a section view of Section 3-3 of Fig. 2;
Fig. 4 is a perspective view of a preferred embodiment of the present invention; and
Fig. 5 is a schematic view of the operation of a preferred embodiment of the present invention.

### DETAILED DESCRIPTION OF THE INVENTION

The technical characteristics, features and advantages of the present invention will become apparent in the following detailed description of the preferred embodiments with reference to the accompanying drawings. However, the drawings are provided for illustration and reference only, but not intended to limit the scope of the invention.

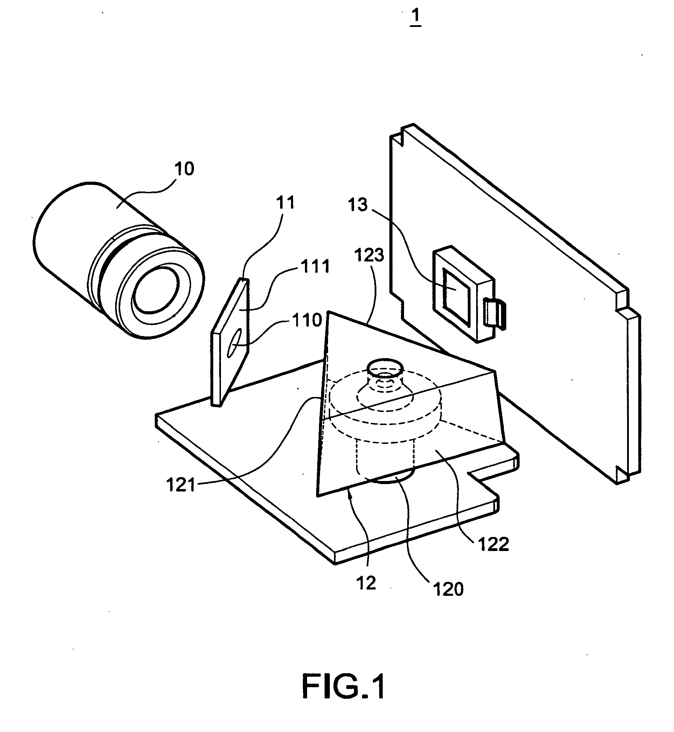

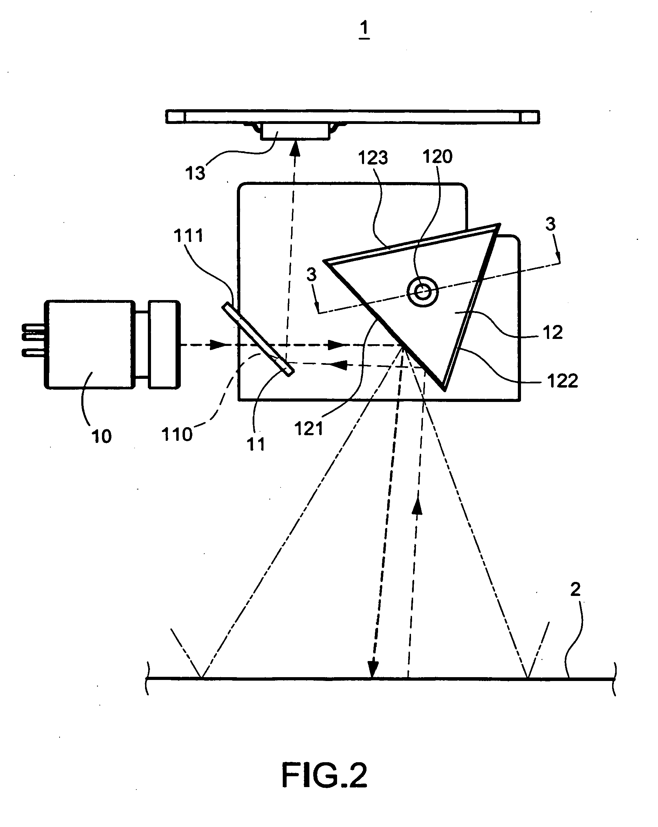

Referring to Figs. 1 and 2 for a perspective view and a schematic view of the operation of an optical scanning module of a barcode scanner useful for the understanding of the invention, and the scanning module 1 comprises a light generator 10, a mirror 11, a reflecting drum 12 and an optical sensor 13.

The reflecting drum 12 comes with a three-dimensional configuration with its external sides continuously surrounded by at least three light reflecting surfaces 121, 122, 123, and has an axle 120 disposed longitudinally at the center of the reflecting drum 12, and the axle 120 is driven to rotate by a transmission device such as a motor (not shown in the figure), so that the reflecting drum 12 can be rotated synchronously with the rotation of the axle 120.

The mirror 11 has a reflecting plane 111 disposed on a side of the reflecting drum 12, such that the reflecting plane 111 can face any one of the light reflecting surfaces 121, 122, 123 of the reflecting drum 12. Meanwhile, the mirror 11 has a penetrating hole 110 thereon for passing the reflecting plane 111.

The light generator 10 is provided for transmitting a light beam such as a laser beam (as indicated by the bold dotted line in Fig. 2), and the light generator 10 of this embodiment is situated at the rear side of the mirror 11, so that after the produced light beam is passed through the penetrating hole 110 of the mirror 11 and projected onto one of the light reflecting surfaces 121, 122, 123 of the reflecting drum 12 to reflect the light beam onto a desired scanning barcode 2. Since the reflecting drum 12 can rotate with its axle 120, the light reflecting surface 121, 122, 123 can be rotated with the reflecting drum 12 accordingly to change the angle of reflection for the light beam projected thereon, therefore a transverse scanning can be performed to the barcode 2, and the bright and dark zones of the barcode 2 provide different reflective indexes for the returned light beam (as indicated by the thin dotted line in Fig. 2) to facilitate reading the barcode 2 after the optical sensor 13 has received the returned light beam.

The module projects the light beam onto the barcode 2, the returned light beam is projected onto one of the light reflecting surfaces 121, 122, 123 of the reflecting drum 12 and reflected onto the reflecting plane 111 of the mirror 11, and the reflecting plane 111 reflects the returned light beam to the optical sensor 13, so that the optical sensor 13 can receive the returned light beam and complete the operation of reading the barcode 2. Since a portion of the light path of the back-and-forth light beam is overlapped, the range of the overall light path of the light beam can be reduced to decrease the relative distance and positions of components of the assembly, and thus the space occupied by the installed scanning module 1 can be reduced to meet the miniaturization requirement.

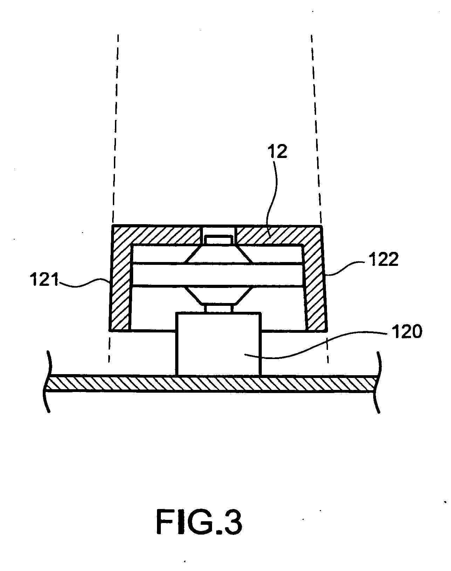

Referring to Fig. 3, each of the light reflecting surfaces 121, 122, 123 of the reflecting drum 12 forms a slope for facilitating the scanning module 1 to scan a barcode 2 with a greater width, and the slopes of the light reflecting surfaces 121, 122, 123 are different, so that the light beam projected thereon can produce the effect of reflection. Further, the barcode 2 can be scanned at a position where the width is not equal to the height after the reflection takes place because the slopes of the light reflecting surface 121, 122, 123 are different, and thus the barcode 2 with a greater width can be scanned.

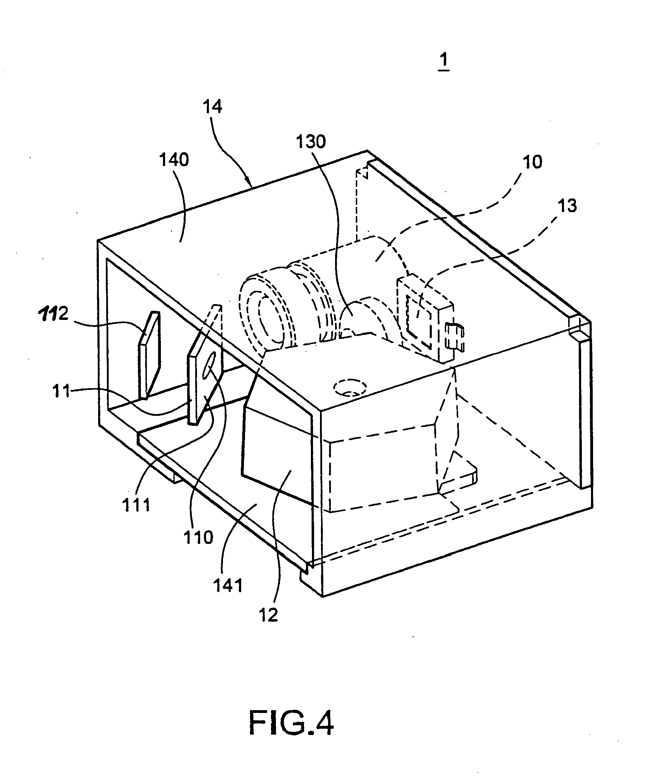

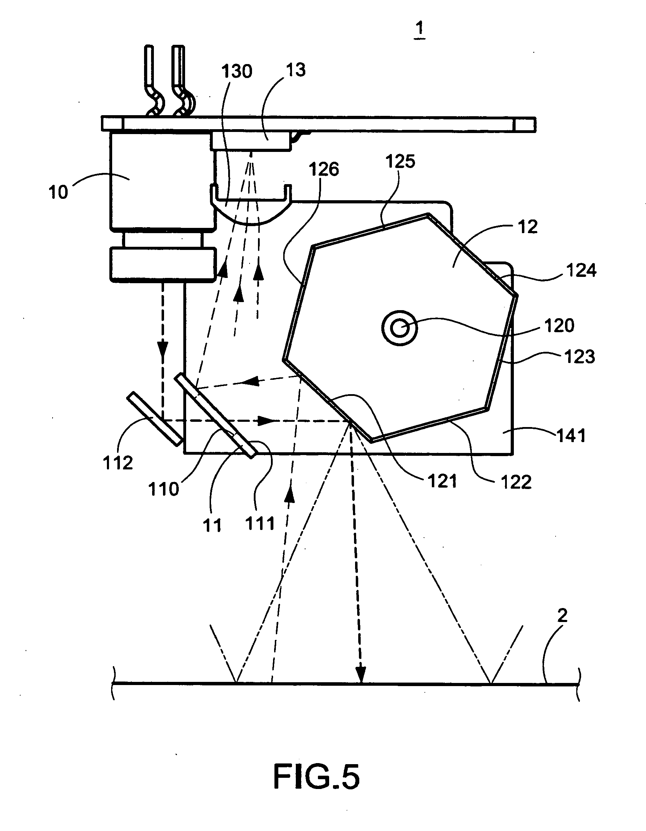

In Figs. 4 and 5, the reflecting drum 12 is formed by surrounding six light reflecting surfaces 121, 122, 123, 124, 125, 126 around the external sides of the reflecting drum 12. The light generator 10 can be situated at a side proximate to the mirror 11, such that after a reflecting plate 112 reflects the produced light beam, the light beam is passed through the penetrating hole 111 of the mirror 11. In this embodiment, the light generator 10 and the optical sensor 13 are installed on the same side to facilitate the scanning module 1 to further reduce its space and achieve a configuration that does not occupy much space.

Meanwhile, the optical sensor 13 can install a focusing lens 130 at the front of the optical sensor 13 for focusing the returned light beam at the optical sensor 13 to increase the signal intensity. In addition, the scanning module 1 further includes a modularized housing 14 for accommodating the aforementioned components, and the housing 14 includes an upper casing 140 and a base 141 disposed under the upper casing 140 for installing and containing the components, so as to form a modularized scanning module 1.

In summation of the description above, the present invention provides a novel product to achieve the expected result and overcome the shortcomings of the prior art.

## Claims

1. An optical scanning module (1) of a barcode scanner for scanning a barcode (2), comprising:
- an optical sensor (13);
- a reflecting drum (12), having an axle (120) disposed longitudinally at the center of the reflecting drum (12), and six light reflecting surfaces (121, 122, 123, 124, 125, 126) disposed continuously around external sides of the reflecting drum;
- a mirror (11), having a reflecting plane (111), and disposed on a lateral side of the reflecting drum (12), such that the reflecting plane (111) faces any one of the light reflecting surfaces (121, 122, 123, 124, 125, 126), and the mirror (11) having a penetrating hole (110) disposed thereon for passing the reflecting plane (111);
- a light generator (10) situated at a lateral side of the reflecting drum (12) proximate to the mirror (11); and
- a housing (14) for containing the optical sensor (13), the reflecting drum (12), the mirror (11) and the light generator (10), wherein the light generator (10) and the optical sensor (13) are situated on the same side of the reflecting drum (12), such that a generated light beam is reflected by a reflecting plate (112) through the penetrating hole (110) of the mirror (11), and that the light beam is projected in a plane perpendicular to the axle (120) of the reflecting drum (12) in a non-radial manner, i.e. in a manner that an extension line of the incident light beam passes the axle (120) of the reflecting drum (12) in a distance there from, onto any one of the light reflecting surfaces (121, 122, 123, 124, 125, 126) of the reflecting drum (12), and such that the light beam is reflected to the barcode (2), and that the returned light beam from the barcode is projected onto any one of the light reflecting surfaces (121, 122, 123, 124, 125, 126) of the reflecting drum (12), and reflected onto the reflecting plane (111) of the mirror (11), and the reflecting plane (111) reflecting the returned light beam to the optical sensor (13) for receiving the returned beam.

2. The optical scanning module as recited in claim 1, wherein the light reflecting surfaces (121, 122, 123, 124, 125, 126) of the reflecting drum (12) form a slope, and the slope of each light reflecting surface (121, 122, 123, 124, 125, 126) is not equal to the slope of other light reflecting surfaces.

3. The optical scanning module as recited in claim 1, wherein the optical sensor (13) has a focusing lens (130) installed at a front end of the optical sensor (13).

4. The optical scanning module as recited in claim 1, wherein the housing (14) comprises an upper casing (140) and a base (141) disposed under the upper casing (140).

## Patentansprüche

1. Optisches Abtastmodul (1) eines Strichcode-Scanners zum Scannen eines Strichcodes (2), das umfasst:
- einen optischen Sensor (13);
- eine reflektierende Trommel (12) mit einer Achse (120), die longitudinal im Zentrum der reflektierenden Welle (12) angeordnet ist, und sechs lichtreflektierenden Oberflächen (121, 122, 123, 124, 125, 126), die um Außenseiten der reflektierenden Trommel ununterbrochen angeordnet sind;
- einen Spiegel (11) mit einer reflektierenden Ebene (111), der auf einer seitlichen Seite der reflektierenden Trommel (12) in der Weise angeordnet ist, dass die reflektierende Ebene (111) einer der lichtreflektierenden Oberflächen (121, 122, 123, 124, 125, 126) zugewandt ist, wobei der Spiegel (11) ein Eindringloch (110) besitzt, das darin so angeordnet ist, dass es durch die reflektierende Ebene (111) verläuft;
- einen Lichtgenerator (10), der sich auf einer seitlichen Seite der reflektierenden Trommel (12) in der Nähe des Spiegels (11) befindet; und
- ein Gehäuse (14), um den optischen Sensor (13), die reflektierende Trommel (12), den Spiegel (11) und den Lichtgenerator (10) zu enthalten, wobei sich der Lichtgenerator (10) und der optische Sensor (13) auf derselben Seite der reflektierenden Trommel (12) befinden, derart, dass ein erzeugtes Lichtstrahlenbündel durch die reflektierende Platte (112) durch das Eindringloch (110) des Spiegels (11) reflektiert wird und dass das Lichtstrahlenbündel in einer Ebene senkrecht zu der Achse (120) der reflektierenden Trommel (12) auf nicht radiale Weise projiziert wird, d. h. in der Weise, dass sich eine Verlaufslinie des auftreffenden Lichtstrahls an der Achse (120) der reflektierenden Trommel (12) in einem Abstand hiervon vorbeibewegt und zu einer der lichtreflektierenden Oberflächen (121, 122, 123, 124, 125, 126) der reflektierenden Trommel (12) verläuft, und in der Weise, dass das Lichtstrahlenbündel auf den Strichcode (2) reflektiert wird und dass das von dem Strichcode zurückkehrende Lichtstrahlenbündel auf eine der lichtreflektierenden Oberflächen (121, 122, 123, 124, 125, 126) der reflektierenden Trommel (12) projiziert wird und auf die reflektierende Ebene (111) des Spiegels (11) reflektiert wird, wobei die reflektierende Ebene (111) das zurückkehrende Lichtstrahlenbündel zu dem optischen Sensor (13) reflektiert, um das zurückkehrende Strahlenbündel zu empfangen.

2. Optisches Abtastmodul nach Anspruch 1, wobei die lichtreflektierenden Oberflächen (121, 122, 123, 124, 125, 126) der reflektierenden Trommel (12) eine Schräge bilden und wobei die Schräge jeder lichtreflektierenden Oberfläche (121, 122, 123, 124, 125, 126) zu der Schräge der anderen lichtreflektierenden Oberflächen nicht gleich ist.

3. Optisches Abtastmodul nach Anspruch 1, wobei der optische Sensor (13) eine Fokussierungslinse (130) besitzt, die an einem vorderen Ende des optischen Sensors (13) installiert ist.

4. Optisches Abtastmodul nach Anspruch 1, wobei das Gehäuse (14) ein oberes Gehäuse (140) und eine unter dem oberen Gehäuse (140) angeordnete Basis (141) umfasst.

## Revendications

1. Module de balayage optique (1) d'un scanner de codes à barres pour scanner un code à barres (2), comprenant :
- un capteur optique (13) ;
- un tambour réfléchissant (12) ayant un axe (120) disposé longitudinalement au centre du tambour réfléchissant (12) et six surfaces réfléchissantes (121, 122, 123, 124, 125, 126) disposées en continu autour des côtés extérieurs du tambour réfléchissant ;
- un miroir (11) ayant un plan de réflexion (111) et disposé sur un côté latéral du tambour réfléchissant (12) de telle sorte que le plan de réflexion (111) fait face vers l'une quelconque des surfaces réfléchissantes (121, 122, 123, 124, 125, 126), et le miroir ayant un trou de pénétration (110) disposé sur lui-même pour traverser le plan de réflexion (111) ;
- un générateur de lumière (10) situé sur un côté latéral du tambour réfléchissant (12) à proximité du miroir (11) ; et
- un boîtier (14) pour contenir le capteur optique (13), le tambour réfléchissant (12), le miroir (11) et le générateur de lumière (10), dans lequel le générateur de lumière (10) et le capteur optique (13) sont situés du même côté du tambour réfléchissant (12), de telle façon qu'un faisceau de lumière généré est réfléchi par une plaque réfléchissante (112) à travers le trou de pénétration (110) du miroir (11), et que le faisceau de lumière est projeté dans un plan perpendiculaire à l'axe (120) du tambour réfléchissant (12) d'une manière non radiale, c'est-à-dire de manière telle qu'une ligne de prolongement du faisceau de lumière incident passe devant l'axe (120) du tambour réfléchissant (12) à une distance de celui-ci, pour tomber sur l'une quelconque des surfaces réfléchissantes (121, 122, 123, 124, 125, 126) du tambour réfléchissant (12) et telle que le faisceau de lumière est réfléchi vers le code à barres (2), et que le faisceau de lumière renvoyée depuis le code à barres est projeté vers l'une quelconque des surfaces réfléchissantes (121, 122, 123, 124, 125, 126) du tambour réfléchissant (12) et est réfléchi sur le plan de réflexion (111) du miroir (11), et le plan de réflexion (111) réfléchit le faisceau lumineux renvoyé vers le capteur optique (13) pour recevoir le faisceau renvoyé.

2. Module de balayage optique selon la revendication 1, dans lequel les surfaces réfléchissantes (121, 122, 123, 124, 125, 126) du tambour réfléchissant (12) forment une pente, et la pente de chaque surface réfléchissante (121, 122, 123, 124, 125, 126) n'est pas égale à la pente d'autres surfaces réfléchissantes.

3. Module de balayage optique selon la revendication 1, dans lequel le capteur optique (13) comprend une lentille de focalisation (130) installée à une extrémité frontale du capteur optique (13).

4. Module de balayage optique selon la revendication 1, dans lequel le boîtier (14) comprend un carter supérieur (140) et une base (141) disposée au-dessous du carter supérieur (140).
